# EUROPÄISCHE PATENTANMELDUNG

(11) **EP 3 654 503 A1**
(43) Veröffentlichungstag der Anmeldung: **20.05.2020**
(21) Anmeldenummer: 19205343.7
(22) Anmeldetag: 25.10.2019
(51) Int. Cl.: H02K 15/095

(54) **NADELWICKELMASCHINE**

(30) Priorität: 26.10.2018 EP 18202840
(71) Anmelder: SMZ Wickel- und Montagetechnik AG, 5436 Würenlos (CH)
(72) Erfinder: LIVI, Luca, 8600 Dübendorf (CH)
(74) Vertreter: Piticco, Lorena

(57) **Zusammenfassung**

Eine Wickeleinheit (2) für eine Wickelvorrichtung (1) zum Wickeln von Wickelgut umfasst eine Halterung (21), einen Drahtdüsenhalter (22) mit einer Drahtdüse (23), eine erste Antriebseinheit (24) umfassend einen ersten Antrieb (25), und einen Schwenkmechanismus (26). Der Drahtdüsenhalter (22) ist entlang einer ersten Achsrichtung (X) einer zweiten Achsrichtung (Y) axial verschiebbar an der Halterung (21) gelagert. Die Drahtdüse (23) ist um eine dritte Achsrichtung (Z) mittels des Schwenkmechanismus (26) schwenkbar am Drahtdüsenhalter (22) angeordnet. Die erste Antriebseinheit (24) umfasst weiter ein Umlenkgetriebe (27) und ist zumindest teilweise an der Halterung (21) gelagert, wobei die erste Antriebseinheit (24) über das Umlenkgetriebe (27) mit dem Schwenkmechanismus (26) in Verbindung steht. Ein Verfahren sowie eine Wickelvorrichtung (1) zum Wickeln von Wickelgut umfasst eine oder mehrere solche Wickeleinheiten (2).

## Beschreibung

### TECHNISCHES GEBIET

Die vorliegende Erfindung betrifft eine Wickeleinheit für eine Wickelvorrichtung zum Wickeln von Wickelgut, eine Wickelvorrichtung zum Wickeln von Wickelgut umfassend eine oder mehrere solcher Wickeleinheiten, sowie ein Verfahren zum Wickeln von Wickelgut unter Verwendung von einer oder mehreren solcher Wickeleinheiten.

### STAND DER TECHNIK

Bei der Herstellung von Rotoren oder nach aussen genuteten Statoren werden heutzutage vor allem Flyer-Wickelmaschinen verwendet. Diese ermöglichen durch hohe Drehzahlen der Flyer auch im Falle von mehreren Spulen mit jeweils vielen Windungen kurze Taktzeiten. Typischerweise werden diese Spulen dabei um mehrere Zähne gewickelt. Die Entwicklung von Elektromotoren verlangt jedoch immer mehr auch Rotoren und Statoren, die Spulen um jeden Zahn aufweisen und dabei auch mit einem Drahtdurchmesser von über 1 Millimeter gewickelt werden. Damit ein optimaler Füllfaktor erhalten wird muss die Spule bei dicken Drähten präzise und orthozyklisch aufgebaut werden. Solche Wicklungen sind mit Flyer-Wickelmaschinen bedingt und nur mit einem hohen Werkzeugaufwand möglich.

### DARSTELLUNG DER ERFINDUNG

Es ist daher eine Aufgabe der vorliegenden Erfindung, eine Wickeleinheit für eine Wickelvorrichtung anzugeben, welche ein verbessertes Wickelverfahren ermöglicht. Insbesondere wird eine Wickeleinheit angegeben, welche ein schnelles und präzises Wickeln erlaubt.

Diese Aufgabe wird mit einer Wickeleinheit gemäss Anspruch 1 gelöst. So wird eine Wickeleinheit für eine Wickelvorrichtung zum Wickeln von Wickelgut angegeben, welche eine Halterung, einen Drahtdüsenhalter mit einer Drahtdüse, eine erste Antriebseinheit umfassend einen ersten Antrieb, und einen Schwenkmechanismus umfasst. Der Drahtdüsenhalter ist entlang einer ersten Achsrichtung und entlang einer zur ersten Achsrichtung senkrecht verlaufenden zweiten Achsrichtung axial verschiebbar an der Halterung gelagert. Die Drahtdüse ist um eine rechtwinklig zur ersten Achsrichtung und zur zweiten Achsrichtung verlaufende dritte Achsrichtung mittels des Schwenkmechanismus schwenkbar am Drahtdüsenhalter angeordnet. Der Schwenkmechanismus wird von der ersten Antriebseinheit angetrieben. Die erste Antriebseinheit umfasst weiter ein Umlenkgetriebe und ist zumindest teilweise an der Halterung gelagert, wobei die erste Antriebseinheit über das Umlenkgetriebe mit dem Schwenkmechanismus in Verbindung steht.

Die Wickeleinheit umfasst also eine erste Antriebsvorrichtung, welche über ein Umlenkgetriebe mit dem Drahtdüsenhalter in Verbindung steht. Das Umlenkgetriebe ist ein Typ von Getriebe, welches einer Übertragung von Antriebsbewegungen, insbesondere von Drehbewegungen und Drehmoment, dient. Konkret ist das Umlenkgetriebe der vorliegenden Erfindung dazu ausgebildet, eine erste Antriebsbewegung der ersten Antriebseinheit bezüglich einer ersten Antriebsrichtung in eine zweite Antriebsbewegung bezüglich einer zweiten Antriebsrichtung zu übertragen. Wie nachfolgend noch eingehender erläutert wird, ist der Schwenkmechanismus vorzugsweise durch die zweite Antriebsbewegung antreibbar. Die erste Antriebsbewegung bezüglich der ersten Antriebsrichtung kann auch als Antrieb bezüglich der Antriebsachse und die zweite Antriebsbewegung bezüglich der zweiten Antriebsrichtung kann als Abtrieb bezüglich der Abtriebsachse bezeichnet werden. Die erste Antriebsrichtung bzw. die Antriebsachse und die zweite Antriebsrichtung bzw. die Abtriebsachse verlaufen dabei winklig zueinander. Oder anders gesagt verlaufen diese beiden Achsen nicht parallel, sondern in einem Winkel zueinander. Bevorzugte Winkel zwischen diesen beiden Achsen liegen in einem Bereich von etwa 50° bis 120°. Insbesondere bevorzugt ist dabei ein Winkel von 90°. In diesem Fall fällt die erste Antriebsrichtung bzw. Antriebsachse mit der zweiten Achsrichtung zusammen, und die zweite Antriebsrichtung bzw. Abtriebsachse fällt mit der ersten Achsrichtung zusammen. Nachfolgend wird der Einfachheit halber der Fall von rechtwinklig zueinander stehenden ersten und zweiten Antriebsrichtungen beschrieben. Oder anders gesagt werden Aussagen und Erläuterungen zu Antriebsbewegungen bezüglich der ersten und zweiten Achsrichtung gemacht. Es gilt dabei zu verstehen, dass diese Aussagen und Erläuterungen allerdings analog für den Fall von anders als rechtwinklig zueinander stehenden Antriebsrichtungen zutreffen. Wie ebenfalls nachfolgend noch eingehender erörtert wird, sind die erste Achsrichtung bzw. Antriebsache und die zweite Achsrichtung bzw. Abtriebsache zudem vorzugsweise bezüglich der dritten Achsrichtung versetzt zueinander angeordnet. Das heisst also, das Umlenkgetriebe ermöglicht eine Übertragung der von der ersten Antriebseinheit bewirkten ersten Antriebsbewegung in eine zweite Antriebsbewegung, wobei diese zweite Antriebsbewegung derart auf den Schwenkmechanismus übertragbar ist, dass der Schwenkmechanismus eine Verschwenkung der Drahtdüse um die dritte Achsrichtung bewirkt. Daraus ergibt sich der Vorteil, dass die Antriebseinheit den axialen Bewegungen der Drahtdüse entlang der ersten Achsrichtung und zweiten Achsrichtung sowie der Schwenkbewegung der Drahtdüse nicht folgen muss. In anderen Worten gesagt wird die Wickeleinheit dadurch gewichtsoptimiert, wodurch sehr schnelle und präzise Wickelvorgänge möglich sind. Zudem sei hier erwähnt, dass auch ein Winkel zwischen der ersten Achsrichtung und der dritten Achsrichtung in analoger Weise wie ein Winkel zwischen der ersten Antriebsrichtung und der zweiten Antriebsrichtung einstellbar sein kann.

Das Wickelgut ist vorzugsweise Draht, zum Beispiel Kupferdraht, von typischen Durchmessern, insbesondere aber auch von Durchmessern von 1 Millimeter und mehr. Das Wickelgut wird hierbei auf einen Wickelkörper, insbesondere in Nuten des Wickelkörpers, zur Herstellung einer Spule für elektrische Maschinen gewickelt. Beim Wickelkörper handelt es sich vorzugsweise um einen Rotor oder um einen nach aussen genuteten Stator. Das automatische Wickelverfahren, welche mit der vorliegenden Wickeleinheit ausgeführt wird, beruht auf der Nadelwickeltechnik, wobei das Wickelgut aus einer Mündungsöffnung der Drahtdüse in Richtung des Wickelkörpers abgegeben wird. Die erste Achsrichtung kann auch als horizontale Richtung und die zweite Achsrichtung kann als vertikale Richtung verstanden werden. Dadurch, dass der Drahtdüsenhalter entlang der horizontalen sowie vertikalen Richtung vor- und zurückbewegbar ist, und dass die Drahtdüse um eine senkrecht zu diesen Richtungen verlaufende weitere Richtung schwenkbar ist, kann mit der Drahtdüse jede beliebige Position angefahren und entsprechend eine Spule aufgebaut werden. Weiter ist es möglich, dass das Wickelgut ohne zusätzliche Werkzeuge an einem Kommutator oder an einzelnen Terminals kontaktiert wird. Die Wickeleinheit erlaubt insbesondere auch, dass Rotoren und/oder Statoren mit mehreren Zähnen bewickelt werden, wobei jeder Zahn einzeln bewickelt wird.

Der erste Antrieb kann unbeweglich an der Halterung befestigt sein oder unbeweglich an einer Wickelvorrichtung befestigbar sein. Das heisst, es ist denkbar den ersten Antrieb direkt an der Halterung zu befestigen. Es ist jedoch auch denkbar, den ersten Antrieb an der Wickelvorrichtung zu befestigen, wenn die Wickeleinheit in eine Wickelvorrichtung eingebaut ist. In beiden Fällen ist eine Befestigung über gängige Befestigungsmittel wie zum Beispiel Schrauben, welche in entsprechende Bohrungen an der Halterung bzw. an der Wickelvorrichtung eingeschraubt werden, denkbar. Unbeweglich heisst hier, dass der erste Antrieb der Wickelbewegung der Wickeleinheit, insbesondere der Bewegung des Drahtdüsenhalters und der Drahtdüse, nicht folgt.

Das Umlenkgetriebe kann entlang der zweiten Achsrichtung verschiebbar an der Halterung gelagert sein. So ist es bevorzugt, dass das Umlenkgetriebe im Falle einer axialen Bewegung des Drahtdüsenhalters entlang der zweiten Achsrichtung, also in vertikaler Richtung nach oben oder nach unten, der Bewegung des Drahtdüsenhalters folgen kann. Dies kann zum Beispiel über eine Halterung umfassend ein sich entlang der zweiten Achsrichtung vertikal nach oben erstreckendes Profil erfolgen, welches über eine Führungsschiene verfügt, entlang welcher ein am Umlenkgetriebe angebrachter Führungswagen geführt werden kann.

Die erste Antriebseinheit umfasst vorzugsweise eine vom ersten Antrieb angetriebene erste Drehmomentwelle (welche der ersten Antriebseinheit zugeordnet werden kann), wobei das Umlenkgetriebe eine Drehmomentwelle (welche im Sinne der obigen Erläuterungen einer Abtriebseinheit zugeordnet werden kann), einen Zahnriemen und mindestens zwei Umlenkrollen mit zwei Riemenscheiben für den Zahnriemen umfasst, wobei die Drehmomentwelle mit dem Schwenkmechanismus verbunden ist, und wobei die Rotationsbewegung der ersten Drehmomentwelle der ersten Antriebseinheit über den Zahnriemen auf die Drehmomentwelle des Umlenkgetriebes übertragbar ist. Oder anders gesagt umfasst die erste Antriebseinheit eine vom ersten Antrieb angetriebene erste Drehmomentwelle, welche eine erste Antriebsbewegung bezüglich der ersten Achsrichtung (respektive bezüglich der zweiten Achsrichtung im Falle von rechtwinklig zueinander stehenden ersten und zweiten Achsrichtungen) ausführt, und das Umlenkgetriebe umfasst eine Drehmomentwelle, auf welche die erste Antriebsbewegung mittels des Zahnriemens übertragen wird, wobei diese Drehmomentwelle eine zweite Antriebsbewegung bezüglich der zweiten Achsrichtung (respektive bezüglich der ersten Achsrichtung im Falle von rechtwinklig zueinander stehenden ersten und zweiten Achsrichtungen) ausführt. Bei der ersten und zweiten Antriebsbewegung handelt es sich um Drehbewegungen der jeweiligen Drehmomentwelle. Im vorliegenden Fall wird das Umlenkgetriebe also durch zwei Drehmomentwellen mit winklig, beispielsweise um 90 Grad versetzt zueinander, angeordneten Achsen bereitgestellt. Die Übertragung der Drehbewegung der ersten Drehmomentwelle der ersten Antriebseinheit auf die Drehmomentwelle des Umlenkgetriebes erfolgt über den Zahnriemen, welcher in sich verdreht über Umlenkrollen läuft. Dabei kann die erste Antriebseinheit so ausgebildet sein, dass sich die erste Drehmomentwelle entlang der zweiten Achsrichtung vertikal vom ersten Antrieb nach oben weg erstreckt und dabei durch eine Tragstruktur des Umlenkgetriebes geführt wird. Vorzugsweise befinden sich mindestens zwei Umlenkrollen mit jeweils zwei Riemenscheiben sowie der Zahnriemen an dieser Tragstruktur, wobei die Drehung des ersten Antriebs über die Riemenscheiben der Umlenkrollen auf die ebenfalls an der Tragstruktur gelagerten Drehmomentwelle des Umlenkgetriebes übertragen wird. Insbesondere bevorzugt sind die Umlenkrollen mit ihren Riemenscheiben dabei derart an der Tragstruktur angeordnet, dass der Zahnriemen dabei in sich verdreht wird, so dass eine Übertragung der ersten Antriebsbewegung entlang der zweiten Achsrichtung auf die zweite Antriebsbewegung entlang der ersten Achsrichtung ermöglicht wird.

Es ist jedoch auch denkbar, das Umlenkgetriebe anstelle mit Zahnriemen und Umlenkrolle mit einem Kegelzahn- oder schrägverzahnten Stirnrädern zu realisieren. In diesem Fall umfasst die erste Antriebseinheit vorzugsweise ebenfalls eine vom ersten Antrieb angetriebene erste Drehmomentwelle, wobei das Umlenkgetriebe eine Drehmomentwelle und ein Kegelzahn- oder schrägverzahnte Stirnräder umfasst.

Der Schwenkmechanismus ist vorzugsweise innerhalb des Drahtdüsenhalters angeordnet und umfasst ein Schraubgetriebe, eine Verbindungswelle und ein Hebelsystem, welches mit der Drahtdüse in Verbindung steht. Dabei kann das Schraubgetriebe einerseits mit der ersten Antriebseinheit, insbesondere mit der Drehmomentwelle des Umlenkgetriebes, und andererseits mit der Verbindungswelle in Verbindung stehen. Die Verbindungswelle wiederum kann mit dem Hebelsystem in Verbindung stehen. Das Schraubgetriebe umfasst vorzugsweise eine Gewindespindel und eine Gewindemutter, wobei die Gewindespindel mit dem Umlenkgetriebe in Verbindung stehen kann, so dass eine Rotationsbewegung der ersten Antriebseinheit über das Umlenkgetriebe auf die Gewindespindel übertragbar ist. In diesem Fall wird diese Rotationsbewegung alsdann in eine lineare Bewegung der Verbindungswelle entlang der ersten Achsrichtung überführt. Das Hebelsystem zur Ausführung der Schwenkbewegung der Drahtdüse umfasst vorzugsweise einen Umlenkhebel, wobei eine Längsverschiebung der Verbindungswelle entlang der ersten Achsrichtung mittels des Umlenkhebels zu einer Schwenkbewegung der Drahtdüse führen kann.

Die Wickeleinheit kann derart ausgebildet sein, dass eine Schwenkbewegung respektive Verschwenkung der Drahtdüse um die dritte Achsrichtung gleichzeitig wie oder zeitversetzt zu einer axialen Verschiebung des Drahtdüsenhalters entlang der ersten Achsrichtung und/oder entlang der zweiten Achsrichtung erfolgen kann. Auch ist eine gleichzeitige oder zweitversetzte Verschiebung entlang der ersten Achsrichtung und entlang der zweiten Achsrichtung denkbar, ohne dass die Drahtdüse verschwenkt wird. Das heisst, die Wickeleinheit ist vorzugsweise derart ausgebildet, dass die axialen Bewegungen des Drahtdüsenhalters sowie die Schwenkbewegung der Drahtdüse unabhängig voneinander erfolgen können.

Vorzugsweise weist die Halterung einen Schlitten auf, welcher entlang der ersten Achsrichtung verschiebbar an der Halterung gelagert ist und/oder welcher entlang der zweiten Achsrichtung verschiebbar an der Halterung gelagert ist. Insbesondere kann der Schlitten über eine Profilschienenführung entlang der ersten Achsrichtung und/oder über eine weitere Profilschienenführung entlang der zweiten Achsrichtung verschiebbar an der Halterung gelagert sein. So ist es denkbar, dass an der Halterung Führungsschienen und am Schlitten entsprechende Führungswagen vorgesehen sind, welche die Profilschienenführung bereitstellen. Damit der Schlitten entlang der ersten Achsrichtung sowie entlang der zweiten Achsrichtung, also horizontal und vertikal, verschiebbar ist, verlaufen vorzugsweise zwei Führungsschienen entlang der ersten Achsrichtung und vorzugsweise zwei Führungsschienen entlang der zweiten Achsrichtung, wobei die Führungswagen entsprechend am Schlitten angeordnet sind.

Vorzugsweise sind der Drahtdüsenhalter und die Drehmomentwelle des Umlenkgetriebes am Schlitten gelagert. Erfolgt nun eine Verschiebung des Schlittens entlang der ersten und/oder zweiten Achsrichtung, so werden auch der Drahtdüsenhalter und die Drehmomentwelle des Umlenkgetriebes entlang der ersten und/oder zweiten Achsrichtung bewegt. Eine Verschiebung des Umlenkgetriebes entlang der zweiten Achsrichtung wird vorzugsweise durch die verschiebbare Lagerung der Tragstruktur des Umlenkgetriebes am Profil ermöglicht.

Es ist bevorzugt, wenn die Wickeleinheit eine zweite Antriebseinheit umfassend einen zweiten Antrieb umfasst, wobei die axiale Verschiebbarkeit des Drahtdüsenhalters entlang der zweiten Achsrichtung durch den zweiten Antrieb bewirkbar ist, und/oder wenn die Wickeleinheit eine dritte Antriebseinheit umfassend einen dritten Antrieb umfasst, wobei die axiale Verschiebbarkeit des Drahtdüsenhalters entlang der ersten Achsrichtung durch den dritten Antrieb bewirkbar ist. Das heisst, die Wickeleinheit umfasst vorzugsweise drei Antriebseinheiten, wobei die erste Antriebseinheit für die Schwenkbewegung der Drahtdüse, die zweite Antriebseinheit für die axiale Verschiebung entlang der zweiten Achsrichtung, und die dritte Antriebseinheit für die axiale Verschiebung entlang der ersten Achsrichtung vorgesehen sind.

Die zweite Antriebseinheit kann ein von dem zweiten Antrieb angetriebenes Schraubgetriebe umfassen, wobei eine Verschiebung des Schlittens entlang der zweiten Achsrichtung durch dieses Schraubgetriebe bewirkbar ist, und/oder die dritte Antriebseinheit kann ein von dem dritten Antrieb angetriebenes Schraubgetriebe umfassen, wobei eine Verschiebung des Schlittens entlang der ersten Achsrichtung durch dieses Schraubgetriebe bewirkbar ist. Beispielsweise kann die zweite Antriebseinheit dabei einen Zahnriemenantrieb umfassen, welcher eine Rotationsbewegung auf eine Gewindespindel überträgt. Weiter kann am Schlitten eine Kugelumlaufmutter vorgesehen sein, so dass die Rotationsbewegung der Gewindespindel über die Kugelumlaufmutter in eine lineare Bewegung des Schlittens entlang der zweiten Achsrichtung führt. Der Antrieb der dritten Antriebseinheit kann eine Antriebsspindel umfassen, welche mit einer am Schlitten befestigten Kugelumlaufmutter zusammenwirkt, so dass eine Rotation der Antriebsspindel über die Kugelumlaufmutter in eine lineare Bewegung des Schlittens entlang der ersten Achsrichtung führt. Anstelle der Schraubgetriebe sind beispielsweise zwei schrägverzahnte Stirnräder, deren Achsen senkrecht zueinander stehen, denkbar.

Der zweite Antrieb und/oder der dritte Antrieb sind vorzugsweise unbeweglich an der Halterung befestigt. Oder anders gesagt ist es von Vorteil, wenn der zweite und/oder dritte Antrieb derart angeordnet ist, dass sie im Wickelprozess nicht bewegt werden, und insbesondere den Bewegungen des Drahtdüsenhalters beziehungsweise des Schlittens nicht folgen.

Vorzugsweise sind der erste Antrieb und, falls vorhanden, der zweite Antrieb und/oder der dritte Antrieb jeweils elektrisch regelbare Antriebe, insbesondere Servomotoren oder Linearmotoren sind. Das Vorsehen von Linearmotoren (Direktantriebe) bringt den Vorteil, dass die bei einem Servomotor vorhandene Gewindespindel eliminiert werden kann, wodurch weniger mechanische Teile benötigt werden. Indem die horizontale Bewegung sowie vertikale Bewegung des Drahtdüsenhalters sowie die Schwenkbewegung der Drahtdüse einzeln angetrieben wird, kann mit der Drahtdüse eine frei programmierbare Bewegung (Kurvenlinie) ausgeführt werden.

Weiter wird eine Wickelvorrichtung zum Wickeln von Wickelgut, insbesondere von Draht, vorzugsweise zur Herstellung einer Spule für eine elektrische Maschine, insbesondere eines Rotors oder eines nach aussen genuteten Stators, umfassend eine oder mehrere Wickeleinheiten wie oben beschrieben angegeben. Das Vorsehen von zwei oder mehr Wickeleinheiten ist von Vorteil, wenn mehrere Spulen gleichzeitig gewickelt werden sollen. Die Wickeleinheiten können dabei jeweils synchron betrieben werden. Die Wickelvorrichtung ermöglicht also ein automatisches Wickeln unter Verwendung der Nadelwickeltechnik. Es gilt zu verstehen, dass jedoch auch andere Techniken als die Nadelwickeltechnik mit der erfindungsgemässen Wickeleinheit durchgeführt werden können. So sind im Prinzip jegliche Techniken und Anwendungen denkbar, welche aus der Bewegungskombination entlang der drei Achsrichtungen erreicht werden können. Dies wird dabei insbesondere durch eine frei programmierbare Robotersteuerung ermöglicht. Weiter gilt zu verstehen, dass die Wickeleinheit nicht über einen Drahtdüsenhalter sondern über ein Greifsystem für Teile-Handling, über eine Lötvorrichtung, eine Kleberdispenseinheit, usw. verfügen kann, wobei ein Teile-Handling, ein Löten, ein Kleben, usw. entlang der drei Achsrichtungen analog zu den Bewegungen des Drahtdüsenhalters erfolgt.

Vorzugsweise verfügt die Wickelvorrichtung weiter über ein Maschinengestell mit einer Tischplatte, auf welcher die Wickeleinheit respektive Wickeleinheiten sowie allfällige weitere Komponenten für das Wickeln von Wickelgut angeordnet respektive daran befestigt werden können. Beispielsweise kann die Wickeleinheit einen Befestigungsflansch aufweisen, über welchen die Wickeleinheit auf der Tischplatte der Wickelvorrichtung befestigt werden kann.

Die Wickelvorrichtung kann weiter eine oder mehrere Schalteinheiten mit jeweils einer Spannvorrichtung für einen Rotor und/oder einen nach aussen genuteten Stator, und/oder eine oder mehrere Drahtklemm- und Schneideeinheiten, wobei jeweils eine in der ersten und zweiten Achsrichtung verschiebbare und um die dritte Achsrichtung drehbare Drahtklemm- und Schneideeinheit der Drahtdüse zugeordnet ist, und/oder eine oder mehrere Drahtzuführungen, wobei jeweils eine mit einer oder mehreren Drahtbremsen und Drahtkompensationsmechanik ausgestattete Drahtzuführung der Drahtdüse des Drahtdüsenhalters zugeordnet ist, umfassen. Zudem kann die Wickelvorrichtung über eine Sicherheitsverschalung, und/oder einen Steuerschrank mit Bedienpanel, und/oder ein Transportband mit Werkstückträger verfügen. Diese Komponenten und deren Funktionsweise sind dem Fachmann gut bekannt.

Weiter wird ein Verfahren zum Wickeln von Wickelgut, insbesondere von Draht, vorzugsweise zur Herstellung einer Spule für eine elektrische Maschine, insbesondere eines Rotors oder eines nach aussen genuteten Stators, unter Verwendung von einer oder mehreren Wickeleinheiten wie oben beschrieben angegeben. Dabei wird der Drahtdüsenhalter entlang der ersten Achsrichtung und/oder entlang der zweiten Achsrichtung axial verschoben, und/oder die Drahtdüse wird um die dritte Achsrichtung verschwenkt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine Schnittansicht durch eine Wickelvorrichtung;
- Fig. 2: zeigt eine teilweise perspektivische Ansicht der Wickelvorrichtung gemäss Figur 1;
- Fig. 3: zeigt eine weitere teilweise perspektivische Ansicht der Wickelvorrichtung gemäss Figur 1;
- Fig. 4: zeigt eine teilweise Schnittansicht durch einen Werkstückträger der Wickelvorrichtung gemäss Figur 1;
- Fig. 5: zeigt eine perspektivische Ansicht einer Wickeleinheit der Wickelvorrichtung gemäss Figur 1;
- Fig. 6: zeigt eine weitere perspektivische Ansicht der Wickeleinheit gemäss Figur 1;
- Fig. 7: zeigt eine perspektivische Ansicht einer Antriebseinheit der Wickeleinheit gemäss Figuren 5 und 6;
- Fig. 8: zeigt eine perspektivische Ansicht eines Drahtdüsenhalters der Wickeleinheit gemäss Figuren 5 und 6;
- Fig. 9: zeigt einen zentralen Längsschnitt durch den Drahtdüsenhalter gemäss Figur 8;
- Fig. 10: zeigt eine perspektivische Ansicht einer weiteren Antriebseinheit mit Profilschienenführung der Wickeleinheit gemäss Figuren 5 und 6;
- Fig. 11: zeigt eine perspektivische Ansicht einer Drahtzuführung der Wickelvorrichtung gemäss Figur 1;
- Fig. 12: zeigt eine weitere perspektivische Ansicht der Drahtzuführung der Wickelvorrichtung gemäss Figur 1;
- Fig. 13: zeigt eine perspektivische Ansicht einer Drahtklemm- und Schneideeinheit der Wickelvorrichtung gemäss Figur 1;
- Fig. 14: zeigt eine teilweise perspektivische Ansicht der Drahtklemm- und Schneideeinheit der Wickelvorrichtung gemäss Figur 1;
- Fig. 15: zeigt eine Wickelbewegung des Drahtdüsenhalters der Wickelvorrichtung gemäss Figur 1 zu einem ersten und einem zweiten Zeitpunkt;
- Fig. 16: zeigt eine Schnittansicht durch eine weitere Wickelvorrichtung umfassend mehrere Wickeleinheiten;
- Fig. 17: zeigt eine teilweise perspektivische Ansicht der weiteren Wickelvorrichtung gemäss Figur 16.

### BESCHREIBUNG BEVORZUGTER AUSFÜHRUNGSFORMEN

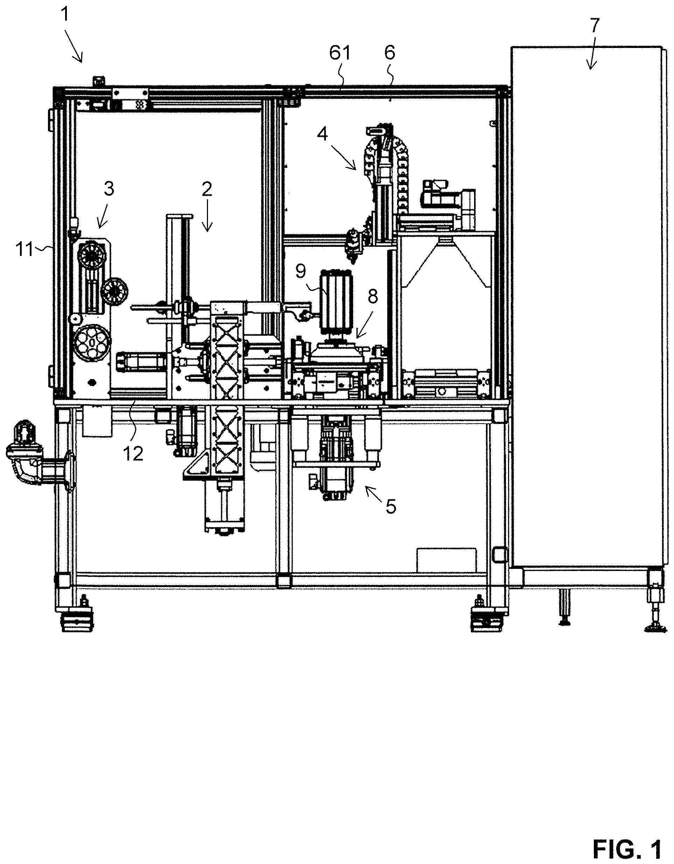

Figur 1 zeigt eine Wickelvorrichtung 1 umfassend ein Maschinengestell 11 mit einer Tischplatte 12, einer Sicherheitsverschalung 6, einer Schalteinheit mit einer Spannvorrichtung 5 für einen Wickelkörper 9 wie einen Rotor, beispielsweise einen Anker, oder einen Stator, insbesondere einen nach aussen genuteten Stator, einer Drahtklemm- und Schneideeinheit 4, einer Drahtzuführung mit Drahtbremsen und Drahtkompensationsmechanik 3, einem Steuerschrank 7 mit Bedienpanel, einem Transportband mit Werkstückträger 8, sowie einer Wickeleinheit 2.

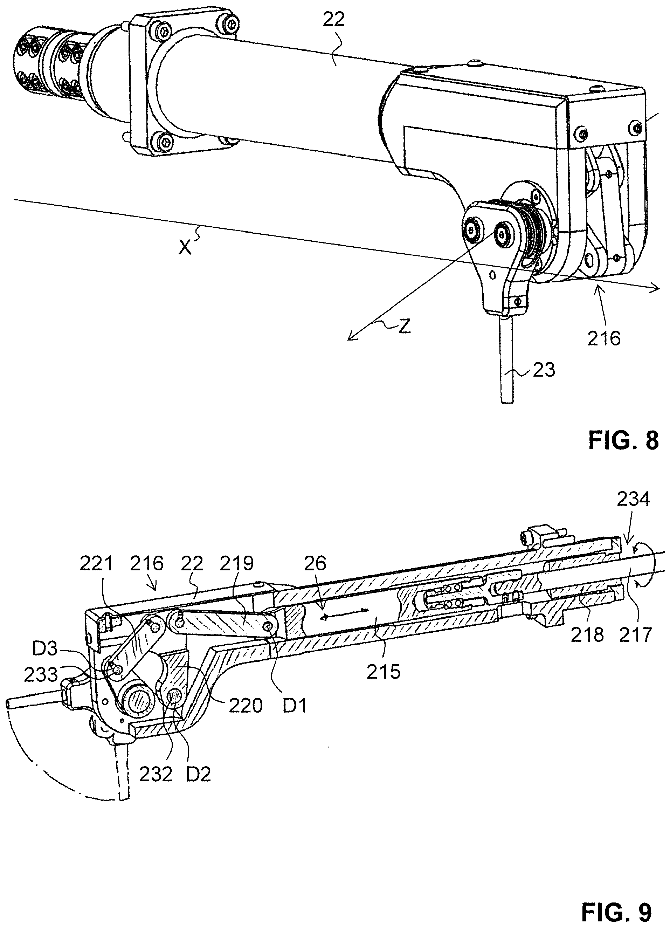

Anhand der Figuren 1 bis 14 werden nun verschiedene Aspekte der Wickelvorrichtung 1 beschrieben.

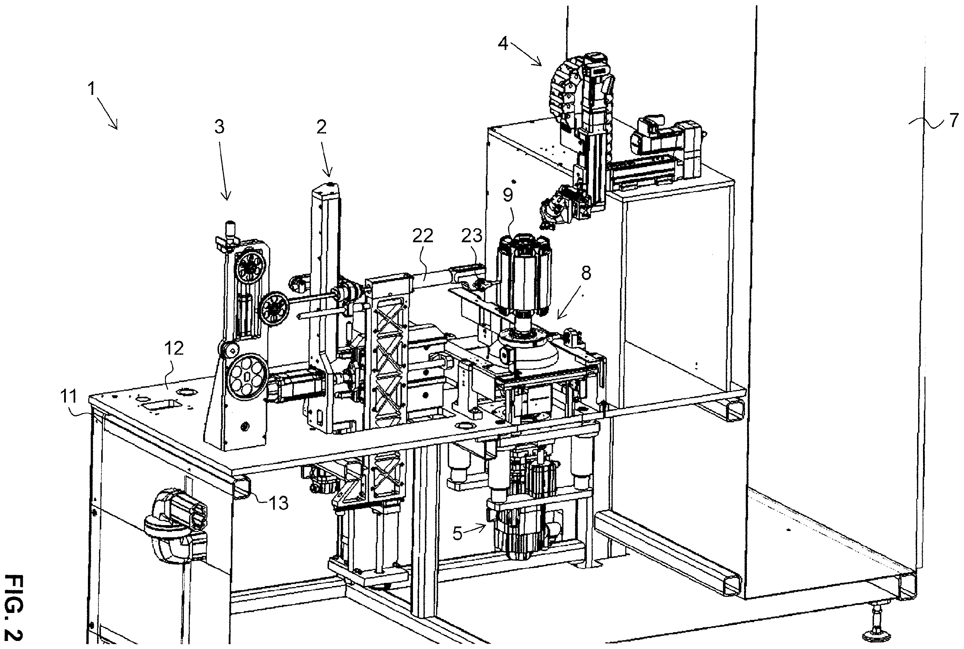

Insbesondere in den Figuren 1 und 2 ist ersichtlich, dass das Maschinengestell 11 geschweisst und aus Vierkantstahlrohren 13 zusammengesetzt ist. In das Maschinengestell 11 ist eine Tischplatte 12 eingebaut, welche als Basis für die weiteren Funktionsbaugruppen 2, 3, 4, 5, dient. Das Maschinengestell 11 ist zumindest teilweise mit einer Sicherheitsverschalung 6 versehen. Die Sicherheitsverschalung 6 kann aus Nutprofilen 61 aus Aluminium bestehen und die Türen sind mit Türschutzhaltern gesichert. Der Steuerschrank 7 weist ein Bedienpanel (nicht dargestellt) zur Bedienung der Wickelvorrichtung 1 auf und ist auf der Rückseite im Maschinengestell 11 integriert. Das Bedienpanel ist an einem Galgen vor der Wickelvorrichtung 1 drehbar aufgehängt.

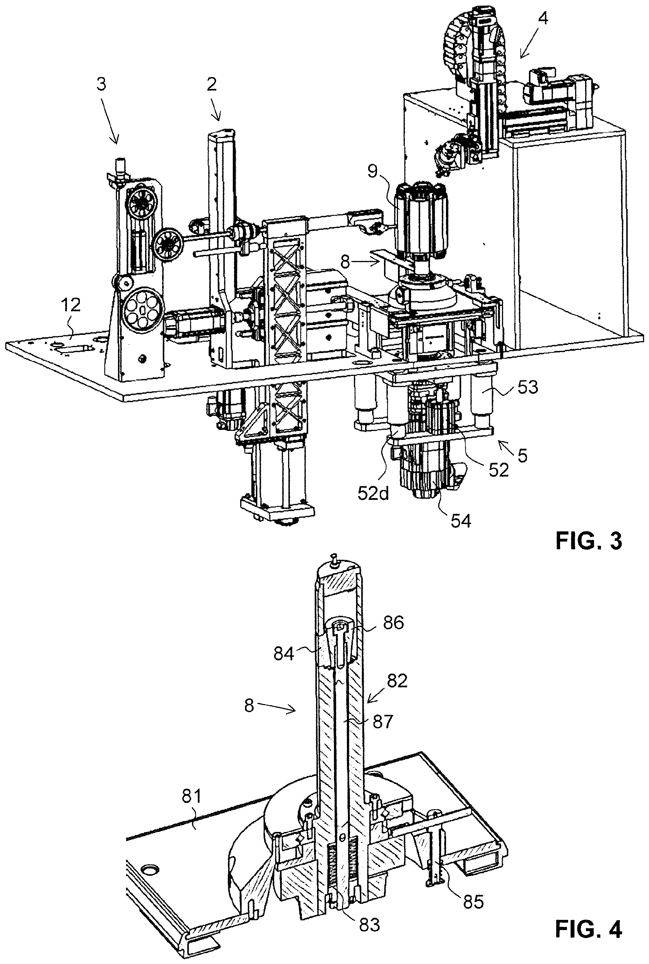

Wie aus den Figuren 3 und 4 hervorgeht, besteht die Schalteinheit 5 zur Aufnahme und Schaltung des Wickelkörpers 9 aus einem vertikal beweglichen Tisch 51, der über zwei Pneumatik-Zylinder 52 synchron angetrieben wird. Die Schalteinheit 5 wird über vertikale Führungsstangen 53 direkt mit der Tischplatte 12 der Wickelvorrichtung 1 verschraubt. Im Zentrum des Tisches 51 ist eine Antriebseinheit 54 umfassend einen Servomotor und ein Planetengetriebe angeordnet. An der Abtriebswelle des Servomotors ist das Mutterstück einer steckbaren Balgkupplung angebracht, welche mit einem entsprechenden Vaterstück der Balgkupplung am Wertstückträger 8 zusammengesteckt wird. Weiter sind auf der Tischplatte 12 Stehbolzen für Zentrierstifte und Anschlagbolzen für den Werkstückträger befestigt. Unmittelbar auf der Tischplatte 12 der Wickelvorrichtung 1 werden Befestigungsmittel wie Niederhalteklauen für die Befestigung des Werkstückträgers 8 verschraubt. Diese gewähren einen sicheren Stand der Drehachse während dem Wickelprozess. Wie gut in Figur 4 ersichtlich ist, besteht der Werkstückträger 8 aus einer Grundplatte 81 und einem drehbar gelagerten Spanndorn 82. Ein vorgespanntes Tellerfederpaket 83 drückt die Spannbacken 84 des Spanndorns 82 gegen den Innendurchmesser des Werkstücks 9, wodurch dieses fixiert wird. Sobald der Werkstückträger 8 seine Arbeitsposition erreicht hat, fährt die darunterliegende Schalteinheit 5 mittels des pneumatisch angetriebenen Tisches 51 vertikal nach oben, wobei die steckbare Balgkupplung zusammengeführt wird. Das Tellerfederpaket 83 befindet sich im Werkstückträger 8 unten auf der Höhe der Balgkupplung, wobei ein Konus 86 über eine Welle 87 nach unten gezogen wird. Die Spannbacken 84 werden über den Konus 86 nach aussen gedrückt. Zudem wird der Werkstückträger 8 von der Schalteinheit zentriert, gegen die Anschlagsbolzen gedrückt und die Arretierung 85 des Werkstückträgers 8 wird freigegeben. Hierzu ist beim Beladen des Werkstückträgers ein Zylinder vorgesehen, welcher von unten her gegen das Tellerfederpaket 83 drückt, über die Welle den Konus 86 nach oben drückt, wodurch die Spannbacken 84 gelöst werden. Die soeben beschriebene Einheit ist nicht in der Wickelvorrichtung 1, 1' integriert und in den hier gezeigten Figuren nicht dargestellt. Die Arretierung 85 hält den Werkstückträger 8 während eines Transports in der Null-Stellung.

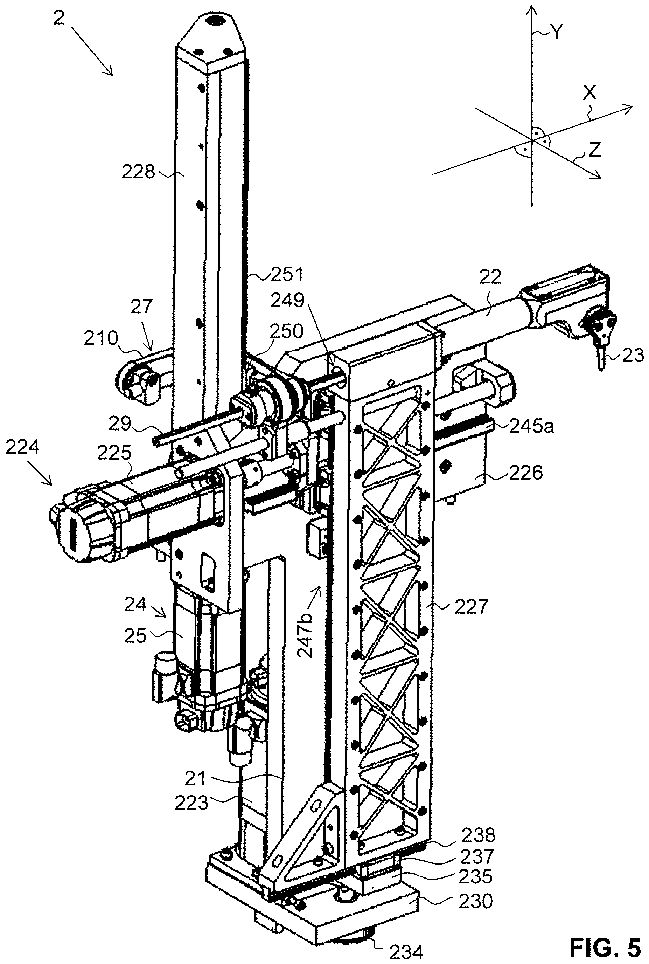

Im Zusammenhang mit den Figuren 5 bis 10 werden nun Aspekte der Wickeleinheit 2 eingehend erläutert. Die Wickeleinheit 2 umfasst eine Halterung 21, welche über Befestigungsmittel 252 an der Tischplatte 12 der Wickelvorrichtung 1 befestig werden kann und einen Drahtdüsenhalter 22 trägt. Die Halterung 21 umfasst eine im Wesentlichen T-förmig ausgebildete Grundplatte 226 sowie einen Schlitten 227, welcher entlang einer ersten Achsrichtung X sowie entlang einer senkrecht zur ersten Achsrichtung X verlaufenden zweiten Achsrichtung Y verschiebbar an der Grundplatte 226 der Halterung 21 gelagert ist. Die erste Achsrichtung X kann auch als horizontale Richtung und die zweite Achsrichtung Y kann als vertikale Richtung verstanden werden. Beim Schlitten 227 handelt es sich um einen im Wesentlichen rechteckigen Profilträger. Eine Verschiebung des Schlittens 227 erfolgt dabei unter anderem über einen Kreuztisch 239, welcher an der Grundplatte 226 geführt gehalten ist. Weiter verfügt die Halterung 21 über ein Profil 228, welches seitlich an der Grundplatte 226 angeordnet ist und sich entlang der zweiten Achsrichtung Y ausgehend von der Grundplatte 226 vertikal nach oben erstreckt. Der Drahtdüsenhalter 22 umfasst eine Drahtdüse 23, wobei der Drahtdüsenhalter 22 entlang der ersten Achsrichtung X und entlang der zweiten Achsrichtung Y axial verschiebbar an der Halterung 21 gelagert ist. Wie nachfolgend eingehender erläutert wird, wird diese axiale Verschiebbarkeit des Drahtdüsenhalters 22 durch den verschiebbaren Schlitten 227 der Halterung 21 ermöglicht. Die Drahtdüse 23 ist um eine rechtwinklig zur ersten Achsrichtung X und zur zweiten Achsrichtung Y verlaufende dritte Achsrichtung Z mittels eines Schwenkmechanismus 26 schwenkbar am Drahtdüsenhalter 22 angeordnet.

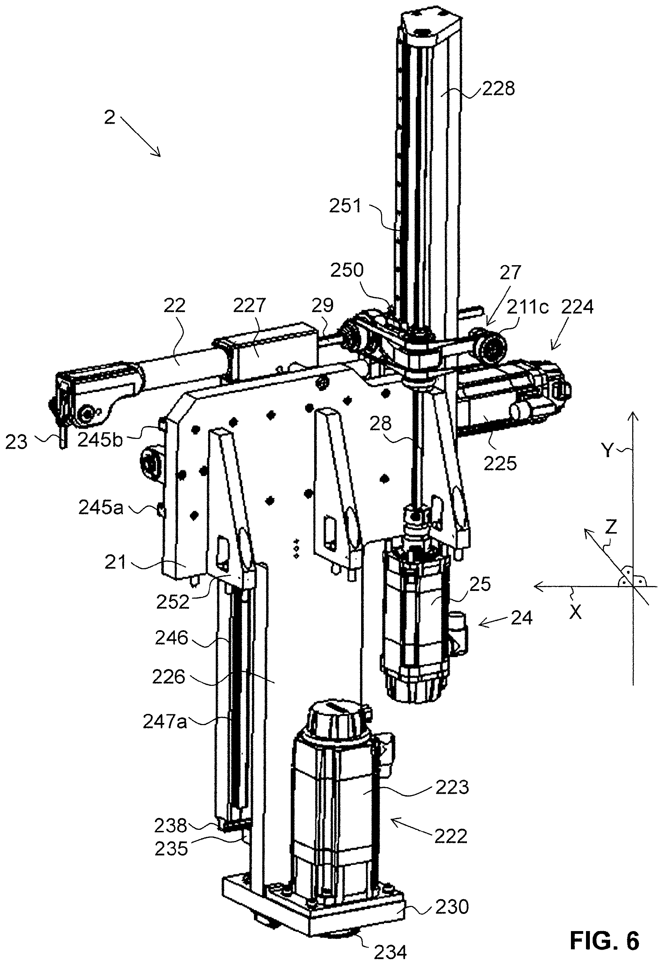

Die Wickeleinheit 2 umfasst hier drei Antriebseinheiten 24, 222, 224 mit jeweils einem Antrieb 25, 223, 225 in Form eines Servomotors. So ist eine erste Antriebseinheit 24 mit einem ersten Antrieb 25 vorgesehen, welcher den Schwenkmechanismus 26 und so das Verschwenken der Drahtdüse 23 um die dritte Achsrichtung Z herum antreibt. Eine zweite Antriebseinheit 222 mit einem zweiten Antrieb 223 dient der axialen Verschiebbarkeit des Drahtdüsenhalters 22 entlang der zweiten Achsrichtung Y, und eine dritte Antriebseinheit 224 umfassend einen dritten Antrieb 225 dient der axialen Verschiebbarkeit des Drahtdüsenhalters 22 entlang der ersten Achsrichtung X. Sowohl der erste Antrieb 25, der zweite Antrieb 223 wie auch der dritte Antrieb 225 sind jeweils unbeweglich, also starr oder fix, an der Halterung 21 beziehungsweise an der Tischplatte 12 der Wickelvorrichtung 1 befestigt. Wie insbesondere aus den Figuren 5 und 6 hervorgeht, ist der dritte Antrieb 225 dabei seitlich in das Profil 228 im Bereich des oberen Endes der Grundplatte 226, also im Bereich des "T" der T-förmigen Grundplatte 226, geschraubt. Der erste Antrieb 25 ist hier im Bereich des oberen Endes der Grundplatte 226 über Befestigungsmittel wie Schrauben 229 mit der Tischplatte 12 der Wickelvorrichtung 1 verbindbar und der zweite Antrieb 223 ist über eine entsprechende Montageplatte 230 am unteren Ende der Grundplatte 226 mit der Grundplatte 226 verbunden. Die vorliegende Wickeleinheit 2 ermöglicht also eine Verschiebung des Drahtdüsenhalters 22 in horizontaler Richtung (erste Achsrichtung X) und vertikaler Richtung (zweite Achsrichtung Y) als auch eine Schwenkbewegung der Drahtdüse 23 um die dritte Achsrichtung Z herum, während dem die Antriebe 25, 223, 225 nicht bewegt werden. Oder anders gesagt machen die Antriebe 25, 223, 225 die Wickelbewegung der Wickeleinheit 2 nicht mit, so dass ihre Massen beim Wickeln nicht bewegt werden. Dabei sind die drei Antriebseinrichtungen 24, 222, 224 unabhängig voneinander betreibbar. So ist es möglich, dass eine Schwenkbewegung der Drahtdüse 23 um die dritte Achsrichtung Z gleichzeitig wie oder aber zeitversetzt zu einer axialen Verschiebung des Drahtdüsenhalters 22 entlang der ersten Achsrichtung X und/oder entlang der zweiten Achsrichtung Y erfolgt. Auch ist es möglich, dass eine Verschiebung des Schlittens 227 entlang der ersten Achsrichtung X gleichzeitig oder zeitversetzt zu einer Verschiebung des Schlittens 227 entlang der zweiten Achsrichtung Y erfolgt, ohne dass die Drahtdüse 23 dabei verschwenkt wird. Das heisst also, jede dieser Bewegungen kann unabhängig von, gleichzeitig wie oder zeitversetzt zu einer oder beiden der anderen Bewegungen erfolgen.

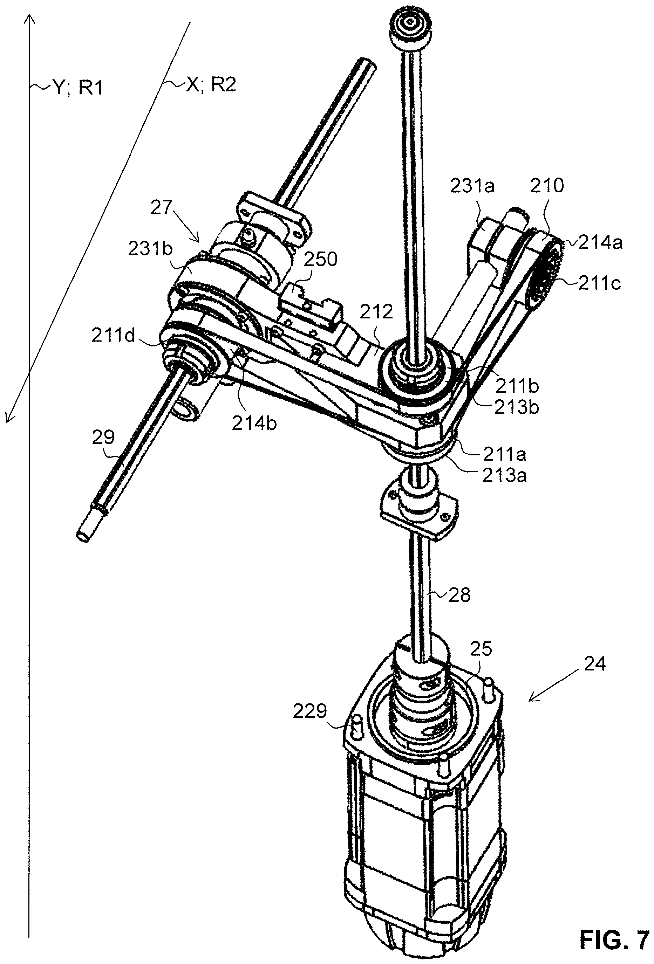

Die erste Antriebseinheit 24 ist also an der Halterung 21 gelagert und umfasst weiter eine vom ersten Antrieb 25 angetriebene erste Drehmomentwelle 28 sowie ein Umlenkgetriebe 27. Die erste Antriebseinheit 24 steht über das Umlenkgetriebe 27 mit dem Schwenkmechanismus 26 in Verbindung. Das Umlenkgetriebe 27 wiederum umfasst eine Drehmomentwelle 29, einen Zahnriemen 210 und vier Umlenkrollen 211a-211d für den Zahnriemen 210. Wie gut in Figur 7 ersichtlich ist, erstreckt sich die erste Drehmomentwelle 28 entlang der zweiten Achsrichtung Y und die Drehmomentwelle 29 erstreckt sich entlang der ersten Achsrichtung X. Die beiden Drehmomentwellen 28, 29 sind also senkrecht zueinander angeordnet. Weiter geht aus Figur 7 hervor, dass die beiden Drehmomentwellen 28, 29 zudem bezüglich der dritten Achsrichtung Z versetzt zueinander angeordnet sind. Die Umlenkrollen 211a-211d umfassen jeweils eine Riemenscheibe 213a, 213b bzw. 214a, 214b. Wie gut in Figur 7 ersichtlich ist, erstreckt sich die erste Drehmomentwelle 28 des ersten Antriebs 25 dabei entlang der zweiten Achsrichtung vertikal nach oben und dabei durch eine im Wesentlichen "L"-förmige, das Umlenkgetriebe 27 tragende Tragstruktur 212 hindurch. An der Tragstruktur 212 sind die vier zwei Umlenkrollen 211a-211d mit deren Riemenscheiben 213a-213b, 214a-214b angebracht. Die erste und zweite Umlenkrolle 211a, 211b mit ihren Riemenscheiben 213a-213b befindet sich an der Austrittsstelle der ersten Drehmomentwelle 28. Die dritte Umlenkrolle 211c mit ihrer Riemenscheibe 214a und die vierte Umlenkrolle 211d mit ihrer Riemenscheibe 214b befinden sich im Bereich der freien Enden 231a, 231b der beiden Schenkel der Tragstruktur 212. Die Tragstruktur 212 wird im Bereich der vierten Umlenkrolle 211d mit der Riemenscheibe 214b von der Drehmomentwelle 29 des Umlenkgetriebes 27 durchsetzt. Dabei verläuft die Drehmomentwelle 29 entlang der ersten Achsrichtung X durch die Tragstruktur 212 sowie durch die vierte Umlenkrolle 211d mit der Riemenscheibe 214b hindurch. Wird nun die erste Drehmomentwelle 28 des ersten Antriebs 25 gedreht, so wird diese Drehung bzw. Rotationsbewegung mittels der Umlenkrollen 211a-211d und deren Riemenscheiben 213a-213b, 214a-214b über den Zahnriemen 210 auf die Drehmomentwelle 29 des Umlenkgetriebes 27 übertragen. Das heisst also, mittels dem Umlenkgetriebe 27 wird eine Rotationsbewegung um die zweite Achsrichtung Y in eine Rotationsbewegung um die erste Achsrichtung X übersetzt. Dies erfolgt über den Zahnriemen 210, welcher mit den Umlenkrollen 211a-211d gespannt wird. Durch die beiden fest gelagerten Drehmomentwellen 28, 29 und der Tragstruktur 212 zwischen der Antriebsachse 28 und der Abtriebsachse 29 kann das gesamte Umlenkgetriebe 27 entlang der zweiten Achsrichtung Y verschoben werden, während dem seine Funktion gewährleistet wird und ohne dass der erste Antrieb 25 entlang der zweiten Achsrichtung Y verschoben werden muss. Es gilt hierbei allerdings zu verstehen, dass eine Übertragung der ersten Antriebsbewegung der ersten Antriebseinheit 24 bezüglich der zweiten Achsrichtung Y in eine zweite Antriebsbewegung bezüglich der ersten Achsrichtung X nicht zwingendermassen bezüglich der hier gezeigten rechtwinklig zueinander stehenden ersten und zweiten Achsrichtung X, Y erfolgen muss. Im Gegenteil, es ist genauso denkbar ein Umlenkgetriebe 27 vorzusehen, bei welchem eine Übertragung der ersten Antriebsbewegung in eine zweite Antriebsbewegung bezüglich ersten und zweiten Antriebsrichtungen Rl, R2 erfolgt, welche zwar winklig, aber nicht rechtwinklig zueinander stehen. Für den vorliegenden Fall von rechtwinklig zueinander stehenden ersten und zweiten Antriebsrichtungen R1, R2 fallen diese mit der zweiten beziehungsweise ersten Achsrichtung Y, X zusammen.

Weiter ist die Drehmomentwelle 29 des Umlenkgetriebes 27 mit dem Schwenkmechanismus 26 verbunden. Der Schwenkmechanismus 26 ist innerhalb des Drahtdüsenhalters 22 angeordnet und umfasst ein Schraubgetriebe 234, eine Verbindungswelle 215 und ein Hebelsystem 216. Dabei ist das Schraubgetriebe 234 einerseits mit der ersten Antriebseinheit 24, insbesondere mit der Drehmomentwelle 29 des Umlenkgetriebes 27, und andererseits mit der Verbindungswelle 215 in Verbindung. Die Verbindungswelle 215 wiederum steht mit dem Hebelsystem 216 in Verbindung. Das Schraubgetriebe 234 umfasst eine Gewindespindel 217 und eine Gewindemutter 218. Die Gewindespindel 217 ist über eine Kupplung (nicht dargestellt) mit der Drehmomentwelle 29 des Umlenkgetriebes 27 verbunden, so dass eine Rotation der Drehmomentwelle 29 auf die Gewindespindel 217 übertragbar ist. Diese Rotation wird alsdann in eine lineare Bewegung der Verbindungswelle 215 entlang der ersten Achsrichtung X übertragen. Das Hebelsystem 216 zur Ausführung der Schwenkbewegung der Drahtdüse 23 umfasst einen Umlenkhebel, welcher aus drei Hebelarmen 219, 220, 221 gebildet wird. Ein erster Hebelarm 219 ist mit einem ersten Ende unter Bildung eines ersten Drehpunktes D1 mit der Verbindungswelle 215 verbunden. Ein zweiter Hebelarm 220 ist mit einem ersten Ende über einen Befestigungsbolzen 232 unter Bildung eines zweiten Drehpunktes D2 drehbar am Drahtdüsenhalter 22 befestigt. Ein dritter Hebelarm 221 ist mit einem ersten Ende über einen Befestigungsbolzen 233 unter Bildung eines dritten Drehpunktes D3 drehbar mit der Drahtdüse 23 verbunden. Die zweiten Enden des ersten und dritten Hebelarms 219, 221 sind am zweiten Ende des zweiten Hebelarms 220 befestigt. Eine Längsverschiebung der Verbindungswelle 215 entlang der ersten Achsrichtung X führt somit mittels dieses Hebelsystems 216 zu einer Schwenkbewegung der Drahtdüse 23.

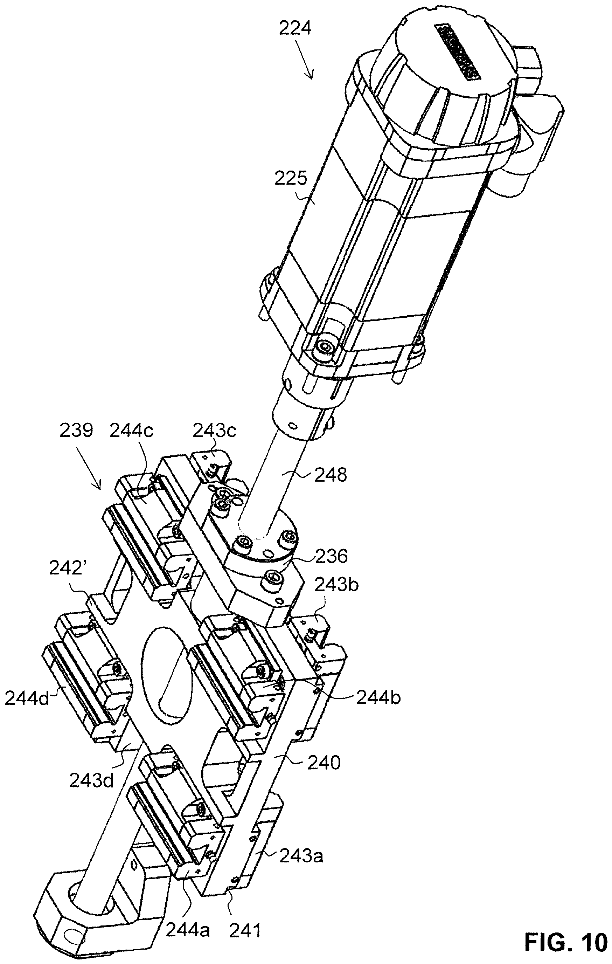

Wie bereits erläutert wurde sind auch die zweite und dritte Antriebseinheit 222, 224 jeweils an der Halterung 21 gelagert, wobei beide Antriebseinheiten 222, 224 über ein vom zweiten respektive dritten Antrieb 223, 225 angetriebenes Schraubgetriebe umfassen. Insbesondere umfasst die zweite Antriebseinheit 222 dabei einen Zahnriemenantrieb 234, welcher eine Rotationsbewegung auf eine Gewindespindel überträgt. Diese Rotationsbewegung wird mittels einer Kugelumlaufmutter in eine lineare Bewegung der Kugelumlaufmutter umgewandelt. Eine Mitnehmerplatte 235, auf welcher der Schlitten 227 der Halterung 21 gelagert ist, ist mit der Kugelumlaufmutter in Verbindung, so dass die Linearbewegung der Kugelumlaufmutter zu einer Verschiebung des Schlittens 227 entlang der zweiten Achsrichtung Y führt. Auf der Mitnehmerplatte 235 befindet sich zudem ein Führungswagen 237 für eine am unteren Ende des Schlittens 227 angeordnete Führungsschiene 238. Diese Führungsschiene 238 verläuft entlang der ersten Achsrichtung X und erlaubt eine lineare Verschiebung des Schlittens 227 bezüglich dieser ersten Achsrichtung X entlang der Mitnehmerplatte 235. Wie ebenfalls bereits erwähnt verfügt die Halterung 21 zudem über einen Kreuztisch 239, welcher an der Grundplatte 226 geführt gehalten ist. Dieser Kreuztisch 239, welcher in Figur 10 separat dargestellt ist, weist eine im Wesentlichen rechteckige Trägerplatte 240 auf, wobei jeweils vier Führungswagen 243a, 243b, 243c, 243d auf einer ersten Oberfläche 241 der Trägerplatte 240 und jeweils vier Führungswagen 244a, 244b, 244c, 244d auf der gegenüberliegenden zweiten Oberfläche 242 der Trägerplatte 240 angeordnet sind. Die Führungswagen 243a, 243b, 243c, 243d der ersten Oberfläche 241 verlaufen senkrecht zu den Führungswagen 244a, 244b, 244c, 244d der zweiten Oberfläche 242. Die Grundplatte 226 der Halterung 21 verfügt über zwei parallel zueinander und entlang der ersten Achsrichtung X verlaufende Führungsschienen 245a, 245b, welche zusammen mit den Führungswagen 243a, 243b, 243c, 243d auf der ersten Oberfläche 241 der Trägerplatte 240 eine Profilschienenführung entlang der ersten Achsrichtung X bereitstellen. Weiter weist der Schlitten 227 auf einer Oberfläche 246 jeweils zwei parallel zueinander und entlang der zweiten Achsrichtung Y verlaufende Führungsschienen 247a, 247b auf, welche zusammen mit den Führungswagen 244a, 244b, 244c, 244d auf der zweiten Oberfläche 242 der Trägerplatte 240 eine weitere Profilschienenführung entlang der zweiten Achsrichtung Y bereitstellen. Wird nun die Mitnehmerplatte 235 mittels des zweiten Antriebs 223 entlang der zweiten Achsrichtung Y bewegt, so gleitet der Schlitten 227 mittels der Profilschienenführung entlang der zweiten Achsrichtung Y nach oben beziehungsweise nach unten. Der Antrieb 225 der dritten Antriebseinheit 224 umfasst eine Antriebsspindel 248, welche mit einer am Kreuztisch 239 befestigten Kugelumlaufmutter 236 zusammenwirkt, und welche sich entlang der ersten Achsrichtung X durch eine zentrale Öffnung in der Trägerplatte 240 des Kreuztisches 239 hindurcherstreckt. Eine Rotation der Antriebsspindel 248 wird so über die Kugelumlaufmutter 236 in eine lineare Bewegung des Kreuztisches 239 entlang der ersten Achsrichtung X überführt.

Wie in Figuren 5 und 6 ersichtlich ist, sind der Drahtdüsenhalter 22 und die Drehmomentwelle 29 des Umlenkgetriebes 27 am Schlitten 227 gelagert. So erstreckt sich die Drehmomentwelle 29 des Umlenkgetriebes 27 zumindest bereichsweise durch eine Öffnung 249 im oberen Ende des Schlittens 227 hinein. Die Kupplung, welche die Drehmomentwelle 29 des Umlenkgetriebes 27 mit der Gewindespindel 217 verbindet, sowie die Gewindemutter 218 sind vollständig innerhalb der Öffnung des Schlittens 227 angeordnet. Der Drahtdüsenhalter 22 wiederum ist im Bereich der Öffnung 249 des Schlittens 227 fest mit dem Schlitten 227 verschraubt. Entsprechend bewirkt eine Verschiebung des Schlittens 227 entlang der ersten Achsrichtung X eine Verschiebung des Drahtdüsenhalters 22, und folglich der Drahtdüse 23, entlang der ersten Achsrichtung X. Weiter bewirkt eine Verschiebung des Schlittens 227 entlang der zweiten Achsrichtung Y eine Verschiebung des Umlenkgetriebes 27 entlang der zweiten Achsrichtung Y. Dazu ist das Umlenkgetriebe 27 entlang der zweiten Achsrichtung Y ebenfalls verschiebbar an der Halterung 21, nämlich am seitlich an der Halterung 21 angeordneten Profil 228, gelagert. Hierzu ist ein Führungswagen 250 am Umlenkgetriebe 27, insbesondere an dessen Tragstruktur 212 vorgesehen, welcher bei einer axialen Bewegung des Schlittens 227 entlang der zweiten Achsrichtung Y über eine Führungsschiene 251 am Profil 228 entlang der zweiten Achsrichtung Y gleiten kann.

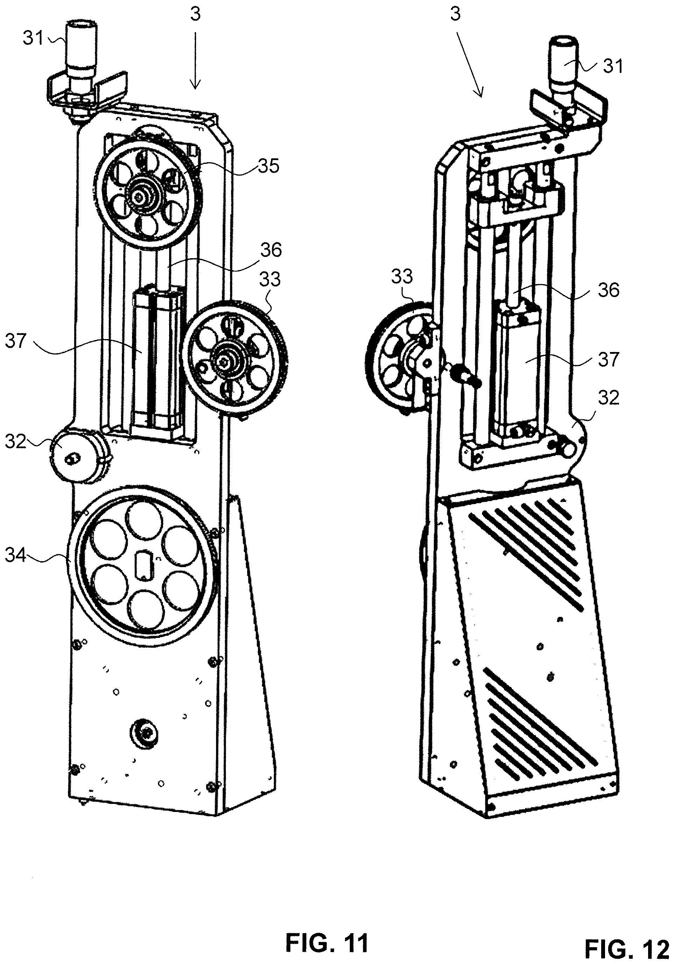

In den Figuren 11 und 12 ist eine Vorder- respektive Rückansicht einer Drahtzuführung 3 gezeigt, welche mit Drahtbremsen und Drahtkompensationsmechanik ausgestattet ist. Mittels dieser Drahtzuführung 3 wird das Wickelgut, insbesondere Draht, der Drahtdüse 23 des Drahtdüsenhalters 22 zugeführt. Diese Drahtzuführung umfasst einen Führungsschlauch 31, über welchen der Draht der Drahtzuführung 3 von oben zugeführt wird. Nach einer Vorbremse 32 wird der Draht um eine Vulkollan-beschichtete Bremsrolle 34 der Magnetpulverbremse gewickelt (540 °) und auf eine Kompensationsrolle 35 geführt. Die Kompensationsrolle 35 wird auf einem Führungsschlitten 36, in vertikaler Richtung durch einen pneumatischen Zylinder 37 mit Leichtlaufeigenschaften nach oben gedrückt. Der Kompensationsdruck im Zylinder 37 wird über ein Proportionalventil über die Steuerung eingestellt. Ausgehend von der Kompensationsrolle 35 wird das Wickelgut über eine weitere Rolle 33 der Drahtdüse zugeführt. So wird gewährleistet, dass beim Wickelprozess nie loser Draht entsteht und der Drahtzug konstant bleibt. Alternativ ist es auch denkbar, die Kompensationsrolle 35 mit einer mechanischen Zug- oder Druckfeder (Spiralfedern) mit einer vorgegebenen Kraft durch Vorspannung nach oben zu drücken. Die Drahtzuführung 3 ist hinter der Wickeleinheit 2 auf der Tischplatte 12 der Wickelvorrichtung 1 geschraubt und so für den Drahtwechsel optimal zugänglich.

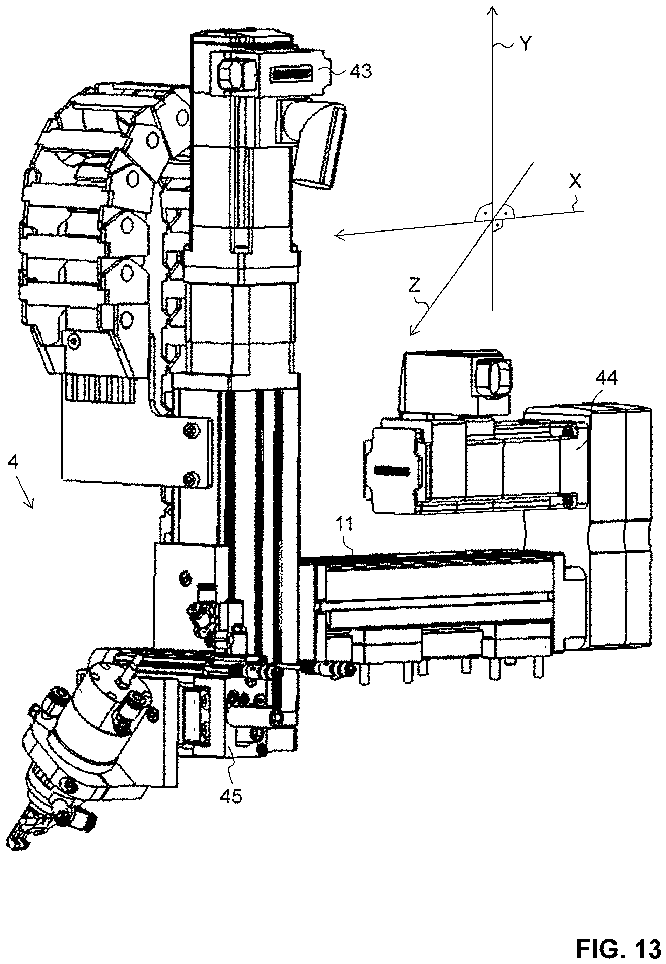

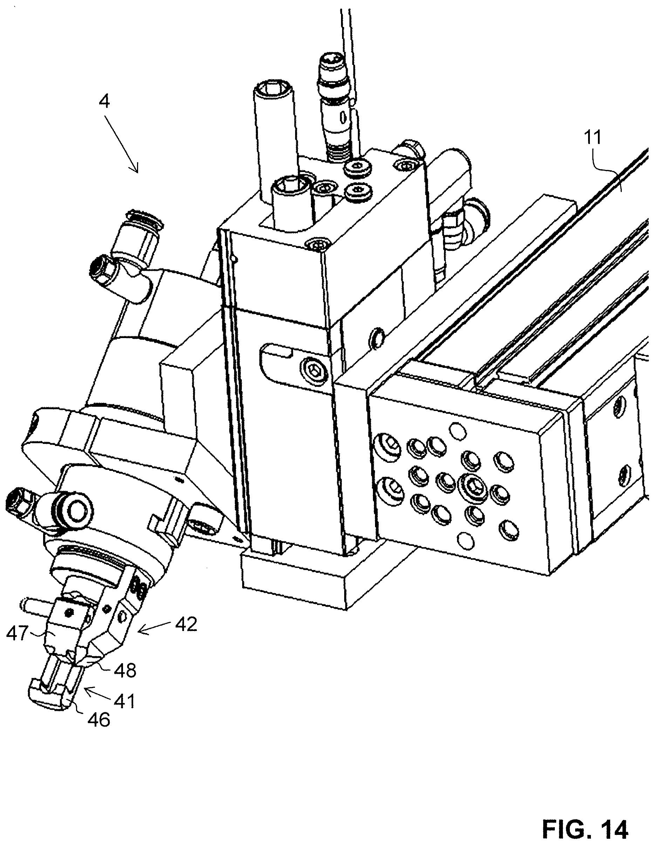

Eine Drahtklemm- und Schneideeinheit 4 ist in den Figuren 13 und 14 dargestellt. Diese Einheit dient dem Fixieren des Drahtanfangs und des Drahtendes mittels eines Drahtklemmteils 41 sowie dem Abschneiden des Drahtes am Ende eines Wickelprozesses mittels eines Drahtschneideteils 42. Die Drahtklemm- und Schneideeinheit 4 ist wie der Drahtdüsenhalter 22 in vertikaler Richtung, also entlang der zweiten Achsrichtung Y, und in horizontaler Richtung, also entlang der ersten Achsrichtung X, mittels jeweils eines elektrischen Antriebs 43, 44 verschiebbar. Zusätzlich zu diesen Linearverschiebungen ist die Drahtklemm- und Schneideeinheit 4 mittels eines pneumatischen Antriebs 45 radial um die senkrecht zur ersten Achsrichtung X und zweiten Achsrichtung Y liegende dritte Achsrichtung Z drehbar. Am Ende des Wickelprozesses, also nachdem der Drahtdüsenhalter 22 die letzte Windung angelegt und das Wickelgut beziehungsweise den Draht über die Kontaktierung am Produkt, z.B. an einem Rotor oder einem nach aussen genuteten Stator 9, verlegt hat, wird der Drahtdüsenhalter 22 mittels der dritten Antriebseinheit 224 entlang der ersten Achsrichtung X horizontal vom Produkt 9 weggefahren. Der Draht liegt dann frei gespannt zwischen dem Produkt und der Drahtdüse 23. Die programmgesteuerten Bewegungsmöglichkeiten des Drahtdüsenhalters 22 und der Drahtklemm- und Schneideeinheit 4 in den drei Achsrichtungen X, Y und Z ergeben sich insbesondere aus Figur 14. Das in Richtung der dritten Achsrichtung Z liegende Drahtklemmteil 41 weist ein hakenförmiges Greifteil 46 zum Greifen des Drahtes und ein in Richtung der dritten Achsrichtung Z auf das Greifteil 46 zu und von diesem weg bewegbares Klemmstück 47 zum Festklemmen des Drahtes zwischen Greifteil 46 und Klemmstück 47 beziehungsweise zum Lösen der Klemmverbindung auf. Die Bewegung des Klemmstücks 47 zwischen den beiden Endanschlägen Klemmposition und Offenstellung erfolgt über eine pneumatische Steuerung. Das seitlich am Klemmstück 47 in Richtung der dritten Achsrichtung Z verschiebbare Drahtschneideteil 42 ist mit einer Schneide 48 versehen. Die das Schneiden des zwischen Greifteil 46 und Klemmstück 47 festgeklemmten Drahtes bewirkende Bewegung des Drahtschneideteils 42 von einer rückwärtigen Position in die Schneidposition und umgekehrt erfolgt ebenfalls über die pneumatische Steuerung. Die Drehbewegung des Drahtklemmteils 41 und des Drahtschneideteils 42 um die dritte Achsrichtung Z erfolgt über einen motorischen, insbesondere über einen pneumatischen oder über einen elektrischen Antrieb. Das heisst also, nachdem die Drahtklemm- und Schneideeinheit 4 mittels ihrer Antriebe über den Draht gefahren wurde, wird der Draht durch bewegen des Klemmstücks 47 zum Greifteil 46 hin eingeklemmt. Alsdann wird das Drahtschneideteil 42 zum Greifteil 46 hin verfahren und dessen Schneide 48 durchtrennt den Draht.

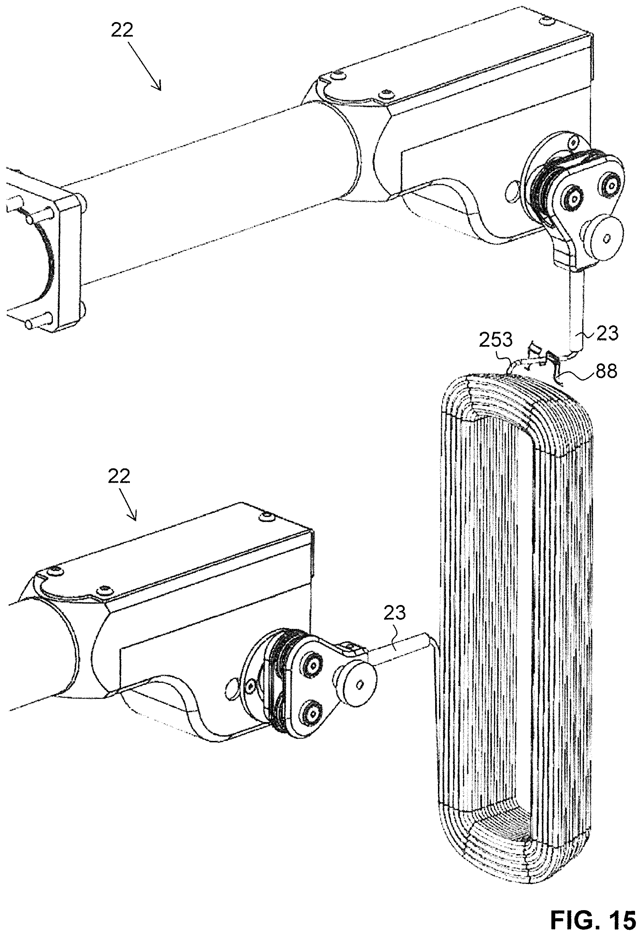

Anhand von Figur 15 soll nun der Wickelprozess genauer erläutert werden. Bei Beginn eines Wickelprozesses ist der Drahtanfang in der Drahtklemm- und Schneideeinheit 4 fixiert. Insbesondere liegt der Draht 253 anfänglich zwischen der Drahtklemm- und Schneideeinheit 4 und der Drahtdüse 23, wobei der Draht durch die Kompensationsrolle 35 der Drahtzuführung 3 gespannt wird. Wenn ein Werkstückträger 8 bereit steht, fährt die Drahtdüse 23 mittels der Antriebseinheiten 24, 222, 224 zum Zentrum des Werkstückträgers 8 und verlegt dort den Draht um einen geschlitzten Hilfsstift. Alsdann verdreht der Werkstückträger 8 das Werkstück 9 hier in Form eines Stators mit Zähnen in Richtung eines ersten Kontakthakens 88. Der Drahtdüsenhalter 22 wird alsdann wiederum über die Antriebseinheiten 24, 222, 224 zurückgefahren und legt den Draht 253 in den Kontakthaken 88 beim ersten Zahn. Dieser Zustand wird in Figur 15 mit der Drahtdüse 23 im oberen Bereich der Figur 15 dargestellt. Danach wird die erste Spule auf dem ersten Zahn gewickelt. Dieser Zustand wird in Figur 15 mit der Drahtdüse 23 im unteren Bereich der Figur 15 dargestellt. Am Ende des Wickelprozesses wird der Drahtdüsenhalter 22 mittels der Antriebseinheiten 24, 222, 224 vom Stator 9 weggefahren, wobei der Draht durch die Drahtklemm- und Schneideeinheit 4 durchtrennt wird. Nachdem der Draht 253 durchtrennt wurde, kann der Werkstückträger 8 über das Transportband gewechselt werden.

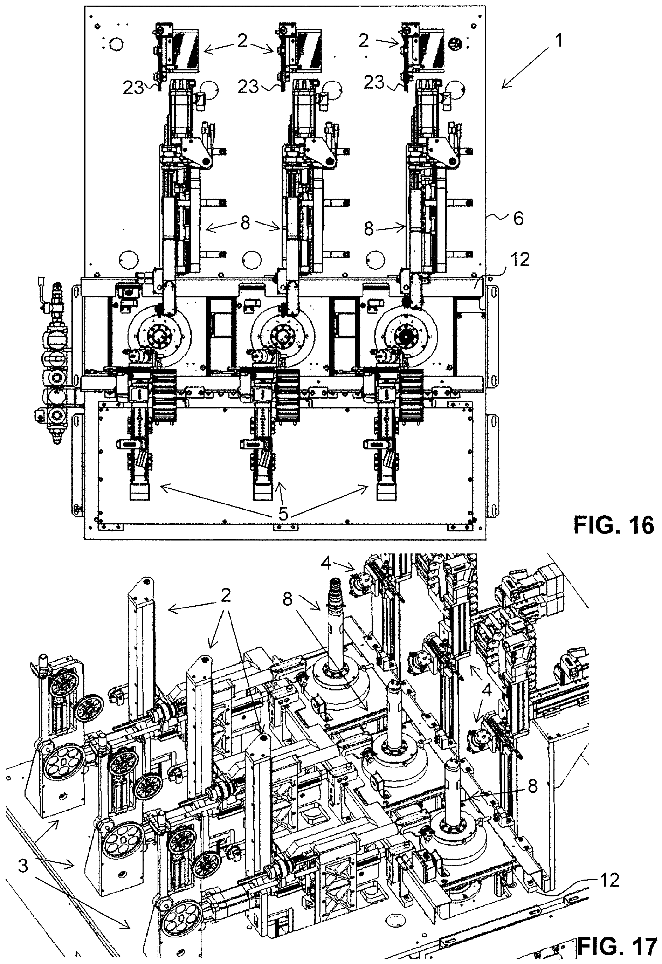

Wie eingangs bereits erwähnt ist das Vorsehen von zwei oder mehr Wickeleinheiten 2 von Vorteil, wenn mehrere Spulen gleichzeitig gewickelt werden sollen. In den Figuren 16 und 17 ist eine Wickelvorrichtung dargestellt, welche hier über drei Wickeleinheiten verfügt. Diese Wickeleinheiten umfassen jeweils die oben erläuterten Komponenten. Weiter ist jeweils eine Schalteinheit mit einer Spannvorrichtung 5 für einen Wickelkörper 9, eine Drahtklemm- und Schneideeinheit 4, eine Drahtzuführung mit Drahtbremsen und Drahtkompensationsmechanik 3, sowie ein Transportband mit Werkstückträger 8 einer Wickeleinheit 2 zugeordnet. All diese Bestandteile sind von der Sicherheitsverschalung 6 umgeben und werden durch das Bedienpanel im Steuerschrank 7 bedient beziehungsweise gesteuert.

**BEZUGSZEICHENLISTE**

| | | | |
|---|---|---|---|
| 1 | Wickelvorrichtung | 226 | Grundplatte |
| 11 | Maschinengestell | 227 | Schlitten |
| 12 | Tischplatte | 228 | Profil |
| 13 | Rohr | 229 | Befestigungsmittel |
| | | 230 | Montageplatte |
| 2 | Wickeleinheit | 231a, 231b | freies Ende |
| 21 | Halterung | 232 | Bolzen |
| 22 | Drahtdüsenhalter | 233 | Bolzen |
| 23 | Drahtdüse | 234 | Zahnriemenantrieb |
| 24 | erste Antriebseinheit | 235 | Mitnehmerplatte |
| 25 | erster Antrieb | 236 | Kugelumlaufmutter |
| 26 | Schwenkmechanismus | 237 | Führungswagen |
| 27 | Umlenkgetriebe | 238 | Führungsschiene |
| 28 | erste Drehmomentwelle | 239 | Kreuztisch |
| 29 | Drehmomentwelle | 240 | Trägerplatte |
| 210 | Zahnriemen | 241 | Oberfläche |
| 211a-211d | Umlenkrolle | 242 | Oberfläche |
| 212 | Tragstruktur | 243a-d | Führungswagen |
| 213a-213b | Riemenscheibe | 244a-d | Führungswagen |
| 214a-214b | Riemenscheibe | 245a-b | Führungsschiene |
| 215 | Verbindungswelle | 246 | Oberfläche |
| 216 | Hebelsystem | 247a-b | Führungsschiene |
| 217 | Gewindespindel | 248 | Antriebsspindel |
| 218 | Gewindemutter | 249 | Öffnung |
| 219 | Hebelarm | 250 | Führungswagen |
| 220 | Hebelarm | 251 | Führungsschiene |
| 221 | Hebelarm | 252 | Befestigungsmittel |
| 222 | zweite Antriebseinheit | 253 | Draht |
| 223 | zweiter Antrieb | | |
| 224 | dritte Antriebseinheit | 3 | Drahtzuführung |
| 225 | dritter Antrieb | 31 | Führungsschlauch |
| 32 | Vorbremse | | |
| 33 | Rolle | 7 | Steuerschrank |
| 34 | Bremsrolle | | |
| 35 | Kompensationsrolle | 8 | Werkstückträger |
| 36 | Führungsschlitten | 81 | Grundplatte |
| 37 | Zylinder | 82 | Spanndorn |
| | | 83 | Tellerfederpaket |
| 4 | Drahtklemm- und | 84 | Spannbacken |
| | Schneideeinheit | 85 | Arretierung |
| 41 | Drahtklemmteil | 86 | Konus |
| 42 | Drahtschneideteil | 87 | Welle |
| 43 | Antrieb | 88 | Kontakthaken |
| 44 | Antrieb | | |
| 45 | Antrieb | 9 | Wickelkörper |
| 46 | Greifteil | | |
| 47 | Klemmstück | X | erste Achsrichtung |
| 48 | Schneide | Y | zweite Achsrichtung |
| | | Z | dritte Achsrichtung |
| 5 | Schalteinheit | D1 | erster Drehpunkt |
| 51 | Tisch | D2 | zweiter Drehpunkt |
| 52 | Zylinder | D3 | dritter Drehpunkt |
| 53 | Führungsstange | R1 | erste Antriebsrichtung |
| 54 | Antriebseinheit | R2 | zweite Antriebsrichtung |
| | | | |
| 6 | Sicherheitsverschalung | | |
| 61 | Nutprofil | | |

## Patentansprüche

1. Wickeleinheit (2) für eine Wickelvorrichtung (1) zum Wickeln von Wickelgut, umfassend:
- eine Halterung (21);
- einen Drahtdüsenhalter (22) mit einer Drahtdüse (23);
- eine erste Antriebseinheit (24) umfassend einen ersten Antrieb (25); und
- einen Schwenkmechanismus (26);
wobei der Drahtdüsenhalter (22) entlang einer ersten Achsrichtung (X) und entlang einer zur ersten Achsrichtung (X) senkrecht verlaufenden zweiten Achsrichtung (Y) axial verschiebbar an der Halterung (21) gelagert ist,
wobei die Drahtdüse (23) um eine rechtwinklig zur ersten Achsrichtung (X) und zur zweiten Achsrichtung (Y) verlaufende dritte Achsrichtung (Z) mittels des Schwenkmechanismus (26) schwenkbar am Drahtdüsenhalter (22) angeordnet ist, und
wobei der Schwenkmechanismus (26) von der ersten Antriebseinheit (24) angetrieben wird,
**dadurch gekennzeichnet, dass** die erste Antriebseinheit (24) weiter ein Umlenkgetriebe (27) umfasst und zumindest teilweise an der Halterung (21) gelagert ist, wobei die erste Antriebseinheit (24) über das Umlenkgetriebe (27) mit dem Schwenkmechanismus (26) in Verbindung steht.

2. Wickeleinheit (2) nach Anspruch 1, wobei das Umlenkgetriebe (27) dazu ausgebildet ist, eine erste Antriebsbewegung der ersten Antriebseinheit (24) bezüglich einer ersten Antriebsrichtung (R1) in eine zweite Antriebsbewegung bezüglich einer zweiten Antriebsrichtung (R2) zu übertragen,
wobei die erste Antriebsrichtung (R1) und die zweite Antriebsrichtung (R2) winklig zueinander verlaufen, und
wobei der Schwenkmechanismus (26) durch die zweite Antriebsbewegung antreibbar ist.

3. Wickeleinheit (2) nach Anspruch 1 oder 2, wobei der erste Antrieb (25) unbeweglich an der Halterung (21) befestigt ist oder unbeweglich an einer Wickelvorrichtung (1) befestigbar ist.

4. Wickeleinheit (2) nach einem der vorhergehenden Ansprüche, wobei das Umlenkgetriebe (27) entlang der zweiten Achsrichtung (Y) verschiebbar an der Halterung (21) gelagert ist.

5. Wickeleinheit (2) nach einem der vorhergehenden Ansprüche, wobei die erste Antriebseinheit (24) eine vom ersten Antrieb (25) angetriebene erste Drehmomentwelle (28) umfasst, wobei das Umlenkgetriebe (27) eine Drehmomentwelle (29), einen Zahnriemen (210) und mindestens zwei Umlenkrollen (211a-211d) mit zwei Riemenscheiben (213a-213b; 214a, 214b) für den Zahnriemen (210) umfasst, wobei die Drehmomentwelle (29) mit dem Schwenkmechanismus (26) verbunden ist, und wobei die Rotationsbewegung der ersten Drehmomentwelle (28) der ersten Antriebseinheit (24) über den Zahnriemen (210) auf die Drehmomentwelle des Umlenkgetriebes (27) übertragbar ist.

6. Wickeleinheit (2) nach einem der vorhergehenden Ansprüche, wobei die Wickeleinheit (2) derart ausgebildet ist, dass eine Schwenkbewegung der Drahtdüse (23) um die dritte Achsrichtung (Z) gleichzeitig wie oder zeitversetzt zu einer axialen Verschiebung des Drahtdüsenhalters (22) entlang der ersten Achsrichtung (X) und/oder entlang der zweiten Achsrichtung (Y) erfolgen kann.

7. Wickeleinheit (2) nach einem der vorhergehenden Ansprüche, wobei die Halterung (21) einen Schlitten (227) aufweist, welcher entlang der ersten Achsrichtung (X) verschiebbar an der Halterung (21) gelagert ist und/oder welcher entlang der zweiten Achsrichtung (Y) verschiebbar an der Halterung (21) gelagert ist.

8. Wickeleinheit (2) nach Anspruch 7, wobei der Schlitten (227) über eine Profilschienenführung (243a-243d; 245a, 245b) entlang der ersten Achsrichtung (X) und/oder über eine weitere Profilschienenführung (244a-244d; 247a, 247b) entlang der zweiten Achsrichtung (Y) verschiebbar an der Halterung (21) gelagert ist, und/oder
wobei der Drahtdüsenhalter (22) und die Drehmomentwelle (29) des Umlenkgetriebes (27) am Schlitten (227) gelagert sind.

9. Wickeleinheit (2) nach einem der vorhergehenden Ansprüche, weiter umfassend eine zweite Antriebseinheit (222) umfassend einen zweiten Antrieb (223), wobei die axiale Verschiebbarkeit des Drahtdüsenhalters (22) entlang der zweiten Achsrichtung (Y) durch den zweiten Antrieb (223) bewirkbar ist, und/oder
weiter umfassend eine dritte Antriebseinheit (224) umfassend einen dritten Antrieb (225), wobei die axiale Verschiebbarkeit des Drahtdüsenhalters (22) entlang der ersten Achsrichtung (X) durch den dritten Antrieb (225) bewirkbar ist.

10. Wickeleinheit (2) nach Anspruch 9, wobei die zweite Antriebseinheit (222) ein von dem zweiten Antrieb (223) angetriebenes Schraubgetriebe (234) umfasst, wobei eine Verschiebung des Schlittens (227) entlang der zweiten Achsrichtung (Y) durch dieses Schraubgetriebe bewirkbar ist, und/oder
wobei die dritte Antriebseinheit (224) ein von dem dritten Antrieb (225) angetriebenes Schraubgetriebe (236) umfasst, wobei eine Verschiebung des Schlittens (227) entlang der ersten Achsrichtung (X) durch dieses Schraubgetriebe bewirkbar ist.

11. Wickeleinheit (2) nach Anspruch 9 oder 10, wobei der zweite Antrieb (223) und/oder der dritte Antrieb (225) unbeweglich an der Halterung (21) befestigt ist.

12. Wickeleinheit (2) nach einem der vorhergehenden Ansprüche, wobei der erste Antrieb (25) und, falls vorhanden, der zweite Antrieb (223) und/oder der dritte Antrieb (225) jeweils elektrisch regelbare Antriebe, insbesondere Servomotoren oder Linearmotoren sind.

13. Wickelvorrichtung (1) zum Wickeln von Wickelgut, insbesondere von Draht, vorzugsweise zur Herstellung einer Spule (9) für eine elektrische Maschine, insbesondere eines Rotors oder eines nach aussen genuteten Stators, umfassend eine oder mehrere Wickeleinheiten (2) nach einem der vorhergehenden Ansprüche.

14. Wickelvorrichtung (1) nach Anspruch 13, weiter umfassend:
- eine oder mehrere Schalteinheiten mit jeweils einer Spannvorrichtung (5) für einen Rotor und/oder einen nach aussen genuteten Stator (9), und/oder
- eine oder mehrere Drahtklemm- und Schneideeinheit (4), wobei jeweils eine in der ersten und zweiten Achsrichtung (X, Y) verschiebbare und um die dritte Achsrichtung (Z) drehbare Drahtklemm- und Schneideeinheit (4) der Drahtdüse (23) des Drahtdüsenhalters (22) zugeordnet ist, und/oder
weiter umfassend eine oder mehrere Drahtzuführungen (3), wobei jeweils eine mit einer oder mehreren Drahtbremsen und Drahtkompensationsmechanik ausgestattete Drahtzuführung (3) der Drahtdüse (23) zugeordnet ist.

15. Verfahren zum Wickeln von Wickelgut, insbesondere von Draht, vorzugsweise zur Herstellung einer Spule für eine elektrische Maschine, insbesondere eines Rotors oder eines nach aussen genuteten Stators (9), unter Verwendung von einer oder mehreren Wickeleinheiten (2) nach einem der Ansprüche 1 bis 12, wobei der Drahtdüsenhalter (22) entlang der ersten Achsrichtung (X) und/oder entlang der zweiten Achsrichtung (Y) axial verschoben wird, und/oder wobei die Drahtdüse (23) um die dritte Achsrichtung (Z) verschwenkt wird.
